# EUROPEAN PATENT APPLICATION

(11) **EP 4 708 389 A1**
(43) Date of publication of application: **11.03.2026**
(21) Application number: 24832521.9
(22) Date of filing: 28.06.2024
(51) Int. Cl.: H01M 4/36, H01M 10/052, H01M 4/02

(54) **POSITIVE ELECTRODE ACTIVE MATERIAL, METHOD FOR PREPARING SAME, POSITIVE ELECTRODE COMPRISING SAME, AND LITHIUM SECONDARY BATTERY**

(30) Priority: 30.06.2023 KR 20230085169; 26.06.2024 KR 20240084066
(71) Applicant: LG Energy Solution, Ltd., Seoul 07335 (KR)
(72) Inventor: KIM, Jong Woo, Daejeon 34122 (KR); YOO, Tae Gu, Daejeon 34122 (KR); PARK, Jin Bum, Daejeon 34122 (KR); YOO, Seung Su, Daejeon 34122 (KR); JO, Chi Ho, Daejeon 34122 (KR); KIM, Su Hwan, Daejeon 34122 (KR); PARK, Byung Chun, Daejeon 34122 (KR)
(74) Representative: Hoffmann Eitle
(86) International application number: PCT/KR2024/009141
(87) International publication number: WO 2025/005745

(57) **Abstract**

A positive electrode active material according to the present invention includes a lithium composite transition metal oxide which has an amount of nickel among total metals excluding lithium of 50 mol% to 80 mol% and is in a form of a single particle composed of one single nodule or a pseudo-single particle that is a composite of 40 or less nodules; and a tungsten-containing coating layer formed on a surface of the lithium composite transition metal oxide, wherein a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material in deionized water at 25°C for 1 hour, satisfies a range of 30 to 45.

## Description

### TECHNICAL FIELD

### Cross-reference to Related Applications

This application claims priority from Korean Patent Application Nos. 10-2023-0085169, filed on June 30, 2023, and 10-2024-0084066, filed on June 26, 2024, the disclosures of which are incorporated by reference herein.

### Technical Field

The present invention relates to a positive electrode active material, a method of preparing the same, and a positive electrode and a lithium secondary battery which include the same.

### BACKGROUND ART

A lithium secondary battery is generally composed of a positive electrode, a negative electrode, a separator, and an electrolyte, and the positive electrode and the negative electrode respectively include active materials capable of intercalating and deintercalating lithium ions.

Lithium cobalt oxide (LiCoO₂), lithium nickel oxide (LiNiO₂), lithium manganese oxide (LiMnO₂ or LiMn₂O₄), or a lithium iron phosphate compound (LiFePO₄) has been used as a positive electrode active material of the lithium secondary battery. Among them, the lithium cobalt oxide has advantages of high operating voltage and excellent capacity characteristics, but is difficult to be commercially used in a large-capacity battery due to the high price and supply instability of cobalt as a raw material. Since the lithium nickel oxide has poor structural stability, it is difficult to achieve sufficient life characteristics. The lithium manganese oxide has excellent stability, but has a problem in that capacity characteristics are inferior. Accordingly, lithium composite transition metal oxides containing two or more types of transition metals have been developed to compensate for the problems of the lithium transition metal oxides containing nickel (Ni), cobalt (Co), or manganese (Mn) alone, and, among them, a lithium nickel cobalt manganese oxide containing Ni, Co, and Mn has been widely used in the field of electric vehicle batteries.

With respect to a positive electrode active material in a form of a single particle, there is less side reaction with an electrolyte solution due to a smaller contact area with the electrolyte solution than a conventional positive electrode active material in a form of a secondary particle, and there is less particle breakage during preparation of an electrode due to excellent particle strength. Thus, in a case in which the positive electrode active material in the form of a single particle is used, there is an advantage in that gas generation and life characteristics are excellent.

However, with respect to a conventional lithium composite transition metal oxide in the form of a single particle, since sizes of primary particles are relatively larger and interfaces between the primary particles, which become diffusion paths for lithium ions, are less than those of a conventional lithium composite transition metal oxide in the form of a secondary particle, lithium mobility is low, and thus, there is a problem in that battery capacity is low and output characteristics are degraded. Thus, operation at high voltage is required to achieve a high-capacity battery.

However, although the NCM-based lithium composite transition metal oxide may achieve relatively stable performance at an operating voltage of 4.3 V or less, it is known that, when the operating voltage becomes 4.35 V or more, the side reaction with the electrolyte solution becomes severe, battery performance is rapidly degraded due to dissolution of transition metal ions, and this performance degradation becomes more severe when a temperature increases.

Therefore, there is a need to develop a NCM-based lithium composite transition metal oxide positive electrode active material in the form of a single particle and/or a pseudo-single particle which has excellent initial efficiency and rate capability at a high voltage of 4.35 V or more.

### DISCLOSURE OF THE INVENTION

### TECHNICAL PROBLEM

An aspect of the present invention provides a positive electrode active material in a form of a single particle and/or a pseudo-single particle which has excellent initial efficiency and rate capability at a high voltage of 4.35 V or more.

### TECHNICAL SOLUTION

In an aspect, the present invention provides a positive electrode active material including a lithium composite transition metal oxide which has an amount of nickel among total metals excluding lithium of 50 mol% to 80 mol% and is in a form of a single particle composed of one single nodule or a pseudo-single particle that is a composite of 40 or less nodules; and a tungsten-containing coating layer formed on a surface of the lithium composite transition metal oxide, wherein a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material in deionized water at 25°C for 1 hour, is in a range of 30 to 45.

The tungsten-containing coating layer may include a crystal phase including at least one selected from the group consisting of Li₂WO₄, Li₆WO₆, Li₇WO₆, Li₆W₂O_{g}, and Li₅W₂O₉-The number of moles of the lithium may be in a range of 150 mmol/kg to 250 mmol/kg.

The number of moles of the tungsten may be in a range of 3 mmol/kg to 9 mmol/kg.

The lithium composite transition metal oxide may have a composition represented by Formula 1.

[Formula 1] LiₐNi_{b}Co_{c}M¹_{d} M²ₑO₂

In Formula 1, M¹ is at least one selected from the group consisting of manganese (Mn) and aluminum (Al), M² is at least one selected from the group consisting of titanium (Ti), magnesium (Mg), zirconium (Zr), yttrium (Y), barium (Ba), calcium (Ca), Zr, strontium (Sr), tungsten (W), tantalum (Ta), niobium (Nb), and molybdenum (Mo), and 1.0≤a≤1.5, 0.5≤b≤0.8, 0<c≤0.3, 0<d≤0.3, and 0≤e≤0.2.

The positive electrode active material may have a Brunauer-Emmett-Teller (BET) specific surface area of 0.50 m²/g to 1.20 m²/g.

The positive electrode active material may have a D₅₀ of 3.0 µm to 6.0 µm.

The tungsten-containing coating layer may further include aluminum, and the number of moles of the aluminum, which is measured by the inductively coupled plasma optical emission spectroscopy (ICP-OES) analysis after performing the pretreatment under the conditions of immersing the positive electrode active material in the deionized water at 25°C for 1 hour, may be in a range of 1,000 mmol/kg to 3,000 mmol/kg.

The tungsten-containing coating layer may further include at least one coating element selected from the group consisting of Al, Ti, fluorine (F), phosphorus (P), Mg, nickel (Ni), cobalt (Co), iron (Fe), chromium (Cr), vanadium (V), copper (Cu), calcium (Ca), zinc (Zn), Zr, Nb, Mo, Sr, antimony (Sb), bismuth (Bi), silicon (Si), and sulfur (S).

In another aspect, the present invention provides a method of preparing a positive electrode active material which includes mixing a lithium composite transition metal oxide, which has an amount of nickel among total metals excluding lithium of 50 mol% to 80 mol% and is in a form of a single particle composed of one single nodule or a pseudo-single particle that is a composite of 40 or less nodules, with a tungsten-containing raw material and performing a heat treatment at a temperature of 410°C to 490°C to form a tungsten-containing coating layer on a surface of the lithium composite transition metal oxide, wherein a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material in deionized water at 25°C for 1 hour, is in a range of 30 to 45.

The tungsten-containing raw material may be at least one selected from the group consisting of WO₃, Li₃WO₄, and (NH₄)₁₀W₁₂O₄₁ ·5H₂O.

The tungsten-containing raw material may be mixed in an amount of 1,000 ppm to 6,000 ppm based on a total weight of the positive electrode active material.

The heat treatment may be performed for 3 hours to 7 hours.

The method may further include mixing an aluminum raw material.

The aluminum raw material may be at least one selected from the group consisting of Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, and aluminum halide.

The aluminum raw material may be mixed in an amount of 400 ppm to 3,000 ppm based on the total weight of the positive electrode active material.

In another aspect, the present invention provides a positive electrode including the above-described positive electrode active material and a lithium secondary battery including the positive electrode. The lithium secondary battery may have a charge end voltage during operation of 4.35 V or more.

### ADVANTAGEOUS EFFECTS

With respect to a positive electrode active material according to the present invention, in a case in which an amount of nickel in a lithium composite transition metal oxide in a form of a single particle and a ratio (Li/W) of a lithium content to a tungsten content in the positive electrode active material, which is measured by inductively coupled plasma optical emission spectroscopy (ICP-OES), are controlled, since the positive electrode active material may include a large number of crystal phases that undergo a redox reaction at a high voltage of 4.35 V or more, it has an effect of improving capacity and may be operated stably.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

In the present invention, a "single particle" means a particle composed of one single nodule. In the present invention, a "pseudo-single particle" means a composite particle formed of 40 or less nodules.

In the present invention, a "nodule" means a particle unit body constituting the single particle and the pseudo-single particle, wherein the nodule may be a single crystal without a crystalline grain boundary, or may be a polycrystal in which grain boundaries do not exist in appearance when observed by using a scanning electron microscope (SEM) with a field of view of 5,000 times to 20,000 times. An average particle diameter of the nodule may be measured as an arithmetic average of particle diameters of nodules which are measured using a scanning electron microscope (SEM).

A "secondary particle" in the present invention means a particle formed by aggregation of a plurality, for example, tens to hundreds of primary particles. Specifically, the secondary particle is an aggregate of more than 40 primary particles.

The expression "particle" used in the present invention may include any one or all of a single particle, a pseudo-single particle, a primary particle, a nodule, and a secondary particle.

"D₅₀" in the present invention means a particle size on the basis of 50% in a volume cumulative particle size distribution of a positive electrode active material. The D₅₀ may be measured by using a laser diffraction method. For example, after dispersing positive electrode active material powder in a dispersion medium, the dispersion medium is introduced into a commercial laser diffraction particle size measurement instrument (e.g., Microtrac MT 3000) and then irradiated with ultrasonic waves of about 28 kHz at an output of 60 W to obtain a volume cumulative particle size distribution graph, and the D₅₀ may then be measured by obtaining a particle size corresponding to 50% of cumulative amount of volume.

An "operating voltage" used in the present invention means a voltage at which lithium ions are deintercalated when the voltage is applied, and may specifically mean a voltage at which the deintercalated lithium ions move to a negative electrode.

A "specific surface area" in the present invention is measured by a Brunauer-Emmett-Teller (BET) method, wherein, specifically, the specific surface area may be calculated from a nitrogen gas adsorption amount at a liquid nitrogen temperature (77K) using BELSORP-mino II by Bell Japan Inc.

"Inductively Coupled Plasma Optical Emission Spectroscopy (ICP-OES)" in the present invention is a method of measuring amounts of lithium and tungsten elements on a surface of the positive electrode active material by analyzing a filtrate which is filtered under conditions of immersing the positive electrode active material sample in deionized water at 25°C for 1 hour. The ICP-OES may be performed in a conventional manner in the art.

### Positive Electrode Active Material

Hereinafter, a positive electrode active material according to the present invention will be described.

The positive electrode active material according to the present invention includes (1) a lithium composite transition metal oxide in a form of a single particle or a pseudo-single particle, and (2) a coating layer formed on a surface of the lithium composite transition metal oxide.

Specifically, the coating layer includes tungsten, and a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material according to the present invention in deionized water at 25°C for 1 hour, satisfies a range of 30 to 45.

### (1) Lithium Composite Transition Metal Oxide

The lithium composite transition metal oxide is in a form of a single particle composed of one single nodule or a pseudo-single particle that is a composite of 40 or less nodules, particularly 2 to 30 nodules, and more particularly 2 to 20 nodules. Since the lithium composite transition metal oxide in the form of a single particle and/or a pseudo-single particle has higher particle strength than a conventional lithium composite transition metal oxide in a form of a secondary particle in which tens to hundreds of primary particles are aggregated, particle cracking during rolling is reduced.

Also, with respect to the lithium composite transition metal oxide in the form of a single particle or a pseudo-single particle according to the present invention, since the number of sub-components (i.e., nodules) constituting the particle is small, changes due to volume expansion and contraction of primary particles during charge and discharge are small, and accordingly, occurrence of cracks in the particle is significantly reduced.

The lithium composite transition metal oxide may have a composition in which an amount of nickel among total metals excluding lithium is in a range of 50 mol% to 80 mol%, particularly 50 mol% to 75 mol%, and more particularly 55 mol% to 75 mol% or 55 mol% to 70 mol%. In a case in which the amount of the nickel is greater than 80 mol%, life characteristics may be degraded rapidly at a high voltage of 4.35 V or more even if a tungsten-containing coating layer is formed, and, in a case in which the amount of the nickel is less than 50 mol%, it is difficult to achieve desired electrochemical properties due to a reduction in capacity.

More specifically, the lithium composite transition metal oxide may have a composition represented by [Formula 1] below.

[Formula 1] LiₐNi_{b}Co_{c}M¹_{d}M²ₑO₂

In Formula 1, M¹ is at least one selected from the group consisting of manganese (Mn) and aluminum (Al), and is specifically Mn or a combination of Mn and Al, and M² is at least one selected from the group consisting of titanium (Ti), magnesium (Mg), zirconium (Zr), yttrium (Y), barium (Ba), calcium (Ca), Zr, strontium (Sr), tungsten (W), tantalum (Ta), niobium (Nb), and molybdenum (Mo). The element M² is not necessarily included, but, in a case in which it is included in an appropriate amount, it may play a role in promoting grain growth during sintering or improving crystal structure stability.
a represents a molar ratio of lithium in the lithium composite transition metal oxide, wherein a may satisfy 1.0≤a≤1.5, 1.0≤a<1.5, or 1.0≤a≤1.2. When the molar ratio of the lithium satisfies the above range, a stable layered crystal structure may be formed.
b represents a molar ratio of nickel among total metals excluding lithium in the lithium composite transition metal oxide, wherein b may satisfy 0.5≤b≤0.8, 0.50≤b≤0.75, 0.55≤b≤0.75, or 0.55≤b≤0.70. Since higher capacity may be achieved as the amount of the nickel among the transition metals is increased, that the amount of the nickel is 0.5 or more is more advantageous for achieving high capacity. However, there are problems in that thermal stability of the positive electrode active material is reduced and the transition metals are dissolved by contact with an electrolyte solution as the amount of the nickel is increased. Thus, in a case in which the amount of the nickel is controlled to a range of 0.5 to 0.8 and a tungsten-containing coating layer is included on the surface of the lithium composite transition metal oxide as in the present invention, since the electrolyte solution and the positive electrode active material are effectively blocked by the tungsten-containing coating layer, excellent stability may be achieved in the positive electrode active material.
c represents a molar ratio of cobalt among the total metals excluding lithium in the lithium composite transition metal oxide, wherein c may satisfy 0<c≤0.3, 0<c<0.3, 0<c<0.2, or 0<c<0.18. When the molar ratio of the cobalt satisfies the above range, good resistance characteristics and output characteristics may be achieved.
d represents a molar ratio of M¹ among the total metals excluding lithium in the lithium composite transition metal oxide, wherein d may satisfy 0<d≤0.3, 0<d<0.3, 0<d<0.2, or 0<d<0.18. When the molar ratio of the M¹ satisfies the above range, structural stability of the positive electrode active material may be excellent.
e represents a molar ratio of element M² among the total metals excluding lithium in the lithium composite transition metal oxide, wherein e may satisfy 0≤e≤0.2, 0≤e≤0.15, or 0≤e≤0.1. When M¹ is included in an appropriate amount, it may play a role in promoting the grain growth during sintering or improving the crystal structure stability.

### (2) Tungsten-containing Coating Layer

The positive electrode active material according to the present invention includes a tungsten-containing coating layer formed on the surface of the lithium composite transition metal oxide in the form of a single particle or a pseudo-single particle.

With respect to a single-particle or pseudo-single-particle positive electrode active material, since lithium diffusion resistance is greater than that of a conventional positive electrode active material in the form of a secondary particle, an output degradation problem due to an increase in resistance becomes more serious when a conventional coating layer is applied to the surface of the single-particle positive electrode active material.

Although a lithium nickel cobalt manganese-based oxide may achieve relatively stable performance at an operating voltage of 4.3 V or less, it is known that, when the operating voltage becomes 4.35 V or more, a side reaction with the electrolyte solution becomes severe, battery performance is rapidly degraded due to dissolution of transition metal ions, and this performance degradation becomes more severe when a temperature increases.

A nickel (Ni)-based positive electrode active material has high capacity due to a higher amount of nickel among transition metals constituting the positive electrode active material than other transition metals, but there is a limitation in that it has structural instability due to unstable Ni³⁺ and Ni⁴⁺ ions present on a surface of the positive electrode active material. In order to solve this structural instability, various techniques for modifying the surface of the positive electrode active material are being studied.

Thus, in order to select a positive electrode active material having an effect of improving capacity while stably operating at a high voltage of 4.35 V or more, the present inventors designed to control a ratio (Li/W) of the number of moles of lithium to the number of moles of tungsten, which was measured by inductively coupled plasma optical emission spectroscopy (ICP-OES) analysis after performing a pretreatment under conditions of immersing the positive electrode active material in deionized water at 25°C for 1 hour, and, in this case, since the positive electrode active material had an effect of improving capacity by including a large number of crystal phases that undergo a redox reaction at high voltage, the present inventors confirmed that the positive electrode active material may contribute to improve performance of a battery.

The coating layer may include tungsten (W) as a coating element, and the ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material according to the present invention in deionized water at 25°C for 1 hour, may be in a range of 30 to 45, particularly 30 to 43, and more particularly 30 to 40. In a case in which the ratio (Li/W) of the number of moles of lithium to the number of moles of tungsten is less than 30 or greater than 45, a ratio of Li₂WO₄ and Li₇WO₆, which are crystalline phases in which intercalation and deintercalation of lithium (Li) are difficult, increases, and in this case, since possibility of structural collapse increases when the intercalation and deintercalation of the Li occur, a problem may occur in which the performance of the battery is degraded.

In contrast, in a case in which the ratio (Li/W) of the number of moles of lithium to the number of moles of tungsten of the positive electrode active material according to the present invention is in a range of 30 to 45, a ratio of Li₆WO₆, Li₆W₂O₉, and Li₅W₂O₉ crystal phases is high in the surface of the positive electrode active material in which crystal phases including at least one selected from the group consisting of Li₂WO₄, Li₆WO₆, Li₇WO₆, Li₆W₂O_{g}, and Li₅W₂O₉ are mixed, and, since the intercalation and deintercalation of the Li are possible in the above crystal phases, the crystal phases have an effect of improving the capacity of the battery and have an effect of improving the resistance due to high mobility of the Li. Also, since the form of the positive electrode active material is maintained during intercalation and deintercalation processes of the Li, the structural stability may be ensured.

The number of moles of the lithium may be in a range of 150 mmol/kg to 250 mmol/kg, particularly 160 mmol/kg to 230 mmol/kg, and more particularly 170 mmol/kg to 200 mmol/kg. The number of moles of the tungsten may be in a range of 3 mmol/kg to 9 mmol/kg, particularly 3 mmol/kg to 8 mmol/kg, and more particularly 4 mmol/kg to 7 mmol/kg.

Specifically, the tungsten-containing coating layer may include a crystal phase including at least one selected from the group consisting of Li₂WO₄, Li₆WO₆, Li₇WO₆, Li₆W₂O₉, and Li₅W₂O₉. Specifically, the tungsten-containing coating layer may include at least one selected from the group consisting of Li₂WO₄, Li₇WO₆, and Li₅W₂O₉ or Li₆WO₆, Li₆W₂O_{g}, and Li₅W₂O₉. Particularly, in a case in which the positive electrode active material according to the present invention has the Li₆WO₆, Li₆W₂O₉, and Li₅W₂O₉ crystal phases, since the intercalation and deintercalation of the Li are possible, there is an effect of improving the capacity of the battery and there is an effect of improving the resistance due to the high mobility of the Li. Also, since the form of the positive electrode active material is maintained during the intercalation and deintercalation processes of the Li, the structural stability may be ensured. Thus, the higher the ratio of the Li₆WO₆, Li₆W₂O₉, and Li₅W₂O₉ crystal phases in the surface of the positive electrode active material in which the crystal phases including at least one selected from the group consisting of Li₂WO₄, Li₆WO₆, Li₇WO₆, Li₆W₂O₉, and Li₅W₂O₉ are mixed, the better the structural stability and performance of the battery may be.

The tungsten-containing coating layer may contain tungsten in an amount of 1,000 ppm to 4,000 ppm based on a total weight of the positive electrode active material. The tungsten may specifically be contained in an amount of 1,500 ppm to 4,000 ppm, more specifically, 2,500 ppm to 3,500 ppm based on the total weight of the positive electrode active material. In a case in which the amount of the tungsten satisfies the above numerical range, the tungsten may react with residual lithium on the surface of the positive electrode active material to form a LiₓW_{y}O_{z} crystal phase, and may achieve an effect of improving the capacity and resistance of the battery by controlling a crystal structure and an appropriate coating amount capable of reacting with the residual lithium.

The tungsten-containing coating layer may further include at least one coating element selected from the group consisting of Al, Ti, fluorine (F), phosphorus (P), Mg, Ni, cobalt (Co), iron (Fe), chromium (Cr), vanadium (V), copper (Cu), Ca, zinc (Zn), Zr, Nb, Mo, Sr, antimony (Sb), bismuth (Bi), silicon (Si), and sulfur (S), in addition to the tungsten (W). Specifically, the tungsten-containing coating layer may further include at least one coating element selected from the group consisting of W, Al, Ti, Co, Mg, and Zr, and may more specifically include W and Al. In this case, in a case in which the tungsten-containing coating layer further contains a boron (B) element, since boron (B) has a higher reactivity with Li than tungsten (W), there is a problem in that formation of crystal phases, such as Li₆WO₆, Li₆W₂O₉, and Li₅W₂O₉, is suppressed, and thus, it is desirable that the tungsten-containing coating layer does not contain boron (B).

Specifically, in a case in which the positive electrode active material according to the present invention includes W and Al as a coating layer, the number of moles of the aluminum, which is measured by inductively coupled plasma optical emission spectroscopy (ICP-OES) analysis after performing a pretreatment under conditions of immersing the positive electrode active material in deionized water at 25°C for 1 hour, may be in a range of 1,000 mmol/kg to 3,000 mmol/kg, particularly 1,500 mmol/kg to 3,000 mmol/kg, and more particularly 2,000 mmol/kg to 2,500 mmol/kg.

The positive electrode active material according to the present invention may have a Brunauer-Emmett-Teller (BET) specific surface area of 0.50 m²/g to 1.20 m²/g, particularly 0.80 m²/g to 0.90 m²/g or 0.81 m²/g to 0.87 m²/g, and more particularly 0.82 m²/g to 0.86 m²/g. In a case in which the BET specific surface area of the positive electrode active material is less than 0.50 m²/g, there is a concern that dispersibility of the positive electrode active material itself may be reduced and the capacity may be reduced, and, in a case in which the BET specific surface area of the positive electrode active material is greater than 1.20 m²/g, there is a concern that the dispersibility of the positive electrode active material in an active material layer may be reduced due to aggregation between the positive electrode active materials and resistance in an electrode may be increased. Thus, in a case in which the BET specific surface area satisfies the above numerical range, initial efficiency and rate capability may be excellently achieved.

The positive electrode active material according to the present invention may have a D₅₀ of 3.0 µm to 6.0 µm, particularly 3.0 µm to 5.5 µm, and more particularly 3.0 µm to 4.5 µm. In a case in which the D₅₀ of the positive electrode active material is less than 3.0 µm, it is difficult to form the active material layer during preparation of the electrode and the electrochemical properties are deteriorated due to poor electrolyte solution impregnability, and, in a case in which the D₅₀ is greater than 6.0 µm, since lithium mobility is decreased, there is a problem in that the resistance is increased and the output characteristics are degraded.

### Method of Preparing Positive Electrode Active Material

Next, a method of preparing a positive electrode active material according to the present invention will be described.

The method of preparing a positive electrode active material according to the present invention is characterized in that it includes a step of mixing a lithium composite transition metal oxide, which has an amount of nickel among total metals excluding lithium of 50 mol% to 80 mol% and is in a form of a single particle composed of one single nodule or a pseudo-single particle that is a composite of 40 or less nodules, with a tungsten-containing raw material and performing a heat treatment at a temperature of 410°C to 490°C to form a tungsten-containing coating layer on a surface of the lithium composite transition metal oxide, wherein a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material in deionized water at 25°C for 1 hour, is in a range of 30 to 45.

### (1) Lithium Composite Transition Metal Oxide Preparation Step

First, the lithium composite transition metal oxide is formed by mixing a transition metal precursor and a lithium raw material and sintering the mixture, wherein the lithium composite transition metal oxide has an amount of nickel among total metals excluding lithium of 50 mol% to 80 mol% and has a form of a single particle composed of one single nodule or a pseudo-single particle that is a composite of 40 or less nodules.

The transition metal precursor may be prepared by a co-precipitation reaction while adding a transition metal solution, an ammonium cationic complexing agent, and a basic compound to a reactor and stirring.

The transition metal solution may be prepared by dissolving transition metal-containing raw materials in a solvent such as water, and, for example, may be prepared by dissolving a nickel-containing raw material and a cobalt-containing raw material in water. Also, if necessary, the transition metal solution may further include a M¹-containing raw material and/or a M²-containing raw material.

The transition metal-containing raw material may be acetic acid salts, carbonates, nitrates, sulfates, halides, sulfides, or oxides of transition metal.

Specifically, the nickel-containing raw material may be nickel-containing acetic acid salts, nitrates, sulfates, halides, sulfides, hydroxides, oxides, or oxyhydroxides, and may specifically be Ni(OH)₂, NiO, NiOOH, NiCO₃·2Ni(OH)₂·4H₂O, NiC₂O₂·2H₂O, Ni(NO₃)₂·6H₂O, NiSO₄, NiSO₄·6H₂O, a fatty acid nickel salt, nickel halide, or a combination thereof, but is not limited thereto.

The cobalt-containing raw material may be cobalt-containing acetic acid salts, nitrates, sulfates, halides, sulfides, hydroxides, oxides, or oxyhydroxides, and may specifically be Co(OH)₂, CoOOH, Co(OCOCH₃)₂·4H₂O, Co(NO₃)₂·6H₂O, CoSO₄, Co(SO₄)₂·7H₂O, or a combination thereof, but is not limited thereto.

The M¹-containing raw material may be a manganese-containing raw material and/or an aluminum-containing raw material. The manganese-containing raw material, for example, may be Mn₂O₃, MnO₂, Mn₃O₄, MnCO₃, Mn(NO₃)₂, MnSO₄·H₂O, manganese acetate, manganese halide, or a combination thereof, and the aluminum-containing raw material, for example, may be Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, aluminum halide, or a combination thereof. However, with respect to Al, it may not be added to the transition metal aqueous solution, but may be added together with the lithium raw material in a sintering step to be described later.

The M²-containing raw material may be acetic acid salts, carbonates, nitrates, sulfates, halides, sulfides, or oxides of M².

An amount of each of the transition metal-containing raw materials added may be determined in consideration of a molar ratio of the transition metal in the positive electrode active material to be finally prepared. In the present invention, the nickel-containing raw material may be added such that it is included in an amount of 50 mol% to 80 mol% based on the total number of moles of the transition metal-containing raw materials.

The ammonium cationic complexing agent may be at least one selected from the group consisting of NH₄OH, (NH₄)₂SO₄, NH₄NO₃, NH₄Cl, CH₃COONH₄, and NH₄CO₃, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

Also, the basic compound may be at least one selected from the group consisting of NaOH, KOH, and Ca(OH)₂, and may be added into the reactor in the form of a solution in which the above compound is dissolved in a solvent. In this case, water or a mixture of water and an organic solvent (specifically, alcohol etc.), which may be uniformly mixed with the water, may be used as the solvent.

If the transition metal solution, the ammonium cationic complexing agent, and the basic compound are added to the reactor and stirred as described above, transition metal precursor particles are formed while the transition metals in the transition metal solution are co-precipitated.

If the transition metal precursor particles are formed by the above-described method, a transition metal precursor is obtained by separating the particles from the reaction solution. For example, after separating the transition metal precursor from the reaction solution by filtering the reaction solution, the separated transition metal precursor may be washed and dried to obtain a transition metal precursor. In this case, a process, such as grinding and/or classification, may be performed, if necessary.

Next, the transition metal precursor and a lithium raw material are mixed and then sintered to prepare a lithium nickel-based oxide in the form of a single particle or a pseudo-single particle. In this case, the M¹-containing raw material and/or the M²-containing raw material may be mixed together and sintered, if necessary, and specific examples of the M¹-containing raw material and/or the M²-containing raw material are the same as those described above.

As the lithium raw material, lithium-containing sulfates, nitrates, acetic acid salts, carbonates, oxalates, citrates, halides, hydroxides, or oxyhydroxides may be used, and, for example, Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a mixture thereof may be used.

The lithium raw material and the positive electrode active material precursor may be mixed such that a molar ratio of Li:total metals in the precursor is in a range of 1:1 to 1.1:1, specifically, 1.02:1 to 1.04:1. When the mixing ratio of the lithium raw material to the metal in the positive electrode active material precursor satisfies the above range, since a layered crystal structure of a positive electrode active material is well developed, the positive electrode active material having excellent capacity characteristics and structural stability may be prepared.

The sintering is performed at a temperature and for a time in which the form of a single particle composed of one single nodule or a pseudo-single particle that is a composite of 40 or less nodules may be formed. In order to form the single particle or pseudo-single particle, the sintering must be performed at a temperature higher than that during preparation of a conventional lithium nickel-based oxide in the form of a secondary particle, and, for example, in a case in which a precursor composition is the same, the sintering must be performed at a temperature about 30°C to 100°C higher than that during the preparation of the conventional lithium nickel-based oxide in the form of a secondary particle. The sintering temperature for forming the single particle or pseudo-single particle may vary depending on a metal composition in the precursor.

The sintering may be performed at 600°C to 1,200°C, specifically, 800°C to 1,000°C. When the sintering temperature satisfies the above range, a lithium composite transition metal oxide in the form of a single particle or pseudo-single particle having excellent electrochemical properties may be prepared. In a case in which the sintering temperature is less than 600°C, a positive electrode active material in the form of a secondary particle is prepared, and, in a case in which the sintering temperature is greater than 1,200°C, since excessive sintering occurs, the electrochemical properties are deteriorated.

The sintering may be performed for 5 hours to 30 hours, specifically, 8 hours to 20 hours in an oxygen atmosphere. In the present specification, the oxygen atmosphere means an atmosphere containing enough oxygen for sintering in addition to an air atmosphere. Particularly, it is desirable to perform the sintering in an atmosphere in which an oxygen partial pressure is higher than that of the air atmosphere.

The lithium composite transition metal oxide prepared by the above-described sintering is in the form of a single particle composed of one single nodule or a pseudo-single particle that is a composite of 40 or less nodules, particularly 2 to 30 nodules, and more particularly 2 to 20 nodules.

Also, the lithium composite transition metal oxide may have a composition in which an amount of nickel among total metals excluding lithium is 50 mol% to 80 mol%, particularly 50 mol% to 75 mol%, and more particularly 55 mol% to 75 mol% or 55 mol% to 70 mol%, and may specifically be a lithium composite transition metal oxide having an amount of nickel among total metals excluding lithium of 50 mol% to 80 mol%, particularly 50 mol% to 75 mol%, and more particularly 55 mol% to 75 mol% or 55 mol% to 70 mol%.

### (2) Tungsten-containing Coating Layer Formation Step

Next, a positive electrode active material including a tungsten-containing coating layer is formed on a surface of the lithium composite transition metal oxide by mixing the lithium composite transition metal oxide with a tungsten-containing raw material and then performing coating by a heat treatment.

The lithium composite transition metal oxide may be mixed with a tungsten-containing raw material. The tungsten-containing raw material may be at least one selected from the group consisting of WO₃, Li₃WO₄, and (NH₄)₁₀W₁₂O₄₁·5H₂O, and may be specifically WO₃, but is not limited thereto.

Also, the tungsten-containing raw material may be mixed in an amount of 1,000 ppm to 6,000 ppm, particularly 2,000 ppm to 5,000 ppm, and more particularly 2,000 ppm to 4,000 ppm based on the total weight of the positive electrode active material. When the mixing ratio of the tungsten-containing raw material satisfies the above range, a coating layer containing tungsten may be uniformly formed on the surface of the lithium composite transition metal oxide, and since Li may be intercalated and deintercalated by forming Li₆WO₆, Li₆W₂O₉, and Li₅W₂O₉ crystal phases, the capacity and resistance of the battery may be improved.

The heat treatment may be performed at a temperature of 410°C to 490°C, specifically, 410°C to 460°C. In a case in which the heat treatment is performed at a temperature of less than 410°C, since WO₃ remains in a separated state because a solid-state reaction between the lithium composite transition metal oxide and the WO₃ does not proceed sufficiently due to the low temperature, there is a problem in that the number of moles of lithium is decreased and the number of moles of tungsten is increased, and, in a case in which the heat treatment is performed at a temperature of greater than 490°C, the measured number of moles of the lithium is decreased due to evaporation of the lithium, but since the tungsten does not evaporate and remains, there is a problem of an imbalance in the numbers of moles of the lithium and the tungsten.

The heat treatment may be performed for 3 hours to 7 hours, specifically, 4 hours to 6 hours. Since the reaction of the lithium composite transition metal oxide with Al₂O₃ and WO₃ may be sufficiently performed when the heat treatment is performed for the above time period, a uniform coating layer may be formed and the crystal phases that undergo a redox reaction, such as Li₆WO₆, Li₆W₂O₉, and Li₅W₂O₉, may be formed at a high ratio by the reaction.

Also, when mixing the lithium composite transition metal oxide with the tungsten-containing raw material, an aluminum raw material may be additionally mixed. The aluminum raw material may be at least one selected from the group consisting of Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, and aluminum halide, and may be specifically Al₂O₃, but is not limited thereto.

Furthermore, the aluminum-containing raw material may be mixed in an amount of 400 ppm to 3,000 ppm, particularly 800 ppm to 2,500 ppm, and more particularly 800 ppm to 2,000 ppm based on the total weight of the positive electrode active material. When the mixing ratio of the aluminum-containing raw material satisfies the above range, interfacial resistance between the electrode and an electrolyte is reduced by forming a protective layer on a surface of the electrode, and accordingly, since the mobility of Li is improved, charge and discharge rates may be improved.

### Positive Electrode

A positive electrode according to the present invention includes the above-described positive electrode active material of the present invention. Specifically, the positive electrode includes a positive electrode collector and a positive electrode active material layer formed on the positive electrode collector, and the positive electrode active material layer includes the positive electrode active material according to the present invention. Since the positive electrode active material has been described above, detailed descriptions thereof will be omitted and the remaining configurations will be only described in detail below.

The positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, more specifically, 90 wt% to 98 wt% based on a total weight of the positive electrode active material layer.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, particularly 0.1 wt% to 9 wt%, and more particularly 0.1 wt% to 5 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 1 wt% to 30 wt%, particularly 1 wt% to 20 wt%, and more particularly 1 wt% to 10 wt% based on the total weight of the positive electrode active material layer.

The positive electrode may be prepared according to a typical method of preparing a positive electrode except that the above-described positive electrode active material is used. Specifically, a positive electrode slurry composition, which is prepared by dissolving or dispersing the positive electrode active material as well as optionally the binder, the conductive agent, and a dispersant in a solvent, is applied to the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

### Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, and, since the positive electrode is the same as described above, detailed descriptions thereof will be omitted and the remaining configurations will be only described in detail below.

Also, the lithium secondary battery may further optionally include a battery container accommodating an electrode assembly of the positive electrode, the negative electrode, and the separator, and a sealing member sealing the battery container.

In the lithium secondary battery, the negative electrode includes a negative electrode collector and a negative electrode active material layer disposed on the negative electrode collector.

The negative electrode collector is not particularly limited as long as it has high conductivity without causing adverse chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve the adhesion of a negative electrode active material. The negative electrode collector, for example, may be used in various shapes such as that of a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt%, 82 wt% to 99 wt%, or 84 wt% to 99 wt% based on a total weight of the negative electrode active material layer.

The binder is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 1 wt% to 30 wt%, 1 wt% to 20 wt%, or 1 wt% to 10 wt% based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating a negative electrode slurry composition, which is prepared by dissolving or dispersing optionally the binder and the conductive agent as well as the negative electrode active material in a solvent, on the negative electrode collector and drying the coated negative electrode collector, or may be prepared by casting the negative electrode slurry composition on a separate support and then laminating a film separated from the support on the negative electrode collector.

In the lithium secondary battery, the separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂) ₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M, particularly 0.5 M to 3.0 M, and more particularly 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

Since the lithium secondary battery according to the present invention as described above has excellent stability and electrochemical performance even at high voltage, a charge end voltage during operation may be 4.35 V or more, and, in a case in which the lithium secondary battery is operated at such a high voltage, it may achieve better high-capacity characteristics than a conventional lithium secondary battery.

Also, since the lithium secondary battery according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Examples

### Example 1

A transition metal precursor having a molar ratio of Ni:Co:Mn of 0.6:0.1:0.3 and a lithium raw material (LiOH) were mixed such that a molar ratio of transition metals (Ni+Co+Mn):Li was 1:1.03, and then sintered at 950°C for 14 hours to prepare LiNi_{0.6}Co_{0.1}Mn_{0.3}O₂ in a form of a single particle.

Thereafter, the sintered product was mixed with Al₂O₃ and WO₃ such that a molar ratio of the sintered product:Al:W was 100:0.5:0.15, and then heat-treated at 425°C for 5 hours to prepare positive electrode active material powder in a form of a single particle on which an aluminum and tungsten-containing coating layer was formed.

### Example 2

Positive electrode active material powder was prepared in the same manner as in Example 1 except that the mixture was heat-treated at 450°C for 5 hours.

### Comparative Example 1

Positive electrode active material powder was prepared in the same manner as in Example 1 except that the mixture was heat-treated at 400°C for 5 hours.

### Comparative Example 2

Positive electrode active material powder was prepared in the same manner as in Example 1 except that the mixture was heat-treated at 500°C for 5 hours.

### Comparative Example 3

Positive electrode active material powder was prepared in the same manner as in Example 1 except that the sintered product was mixed with Al₂(OH)₃ and WO₃.

### Comparative Example 4

Positive electrode active material powder was prepared in the same manner as in Example 1 except that the sintered product was mixed with Al₂O₃, WO₃, and H₃BO₃ such that a molar ratio of the sintered product:Al:W:B was 100:0.5:0.15:0.15.

### Experimental Example 1: ICP Analysis of the Positive Electrode Active Material

The numbers of moles of Li element and W element in surfaces of the positive electrode active materials respectively prepared in Examples 1 and 2 and Comparative Examples 1 to 4 were measured.

The numbers of moles of the Li element and the W element in the positive electrode active material were measured by inductively coupled plasma optical emission spectroscopy (ICP-OES (PerkinElmer, Optima 7300DV)) analysis of a filtrate which was filtered under conditions of immersing each positive electrode active material in deionized water at 25°C for 1 hour.

Measurement results are presented in [Table 1] below.

**[Table 1]**

| | Particle form | Ni content [mol%] | The number of moles of Li [mmol/kg] | The number of moles of W [mmol/kg] | Li/W |
|---|---|---|---|---|---|
| Example 1 | Single particle | 60 | 196.17 | 6.51 | 30.15 |
| Example 2 | Single particle | 60 | 172.43 | 4.32 | 39.92 |
| Comparative Example 1 | Single particle | 60 | 154.99 | 6.69 | 23.18 |
| Comparative Example 2 | Single particle | 60 | 171.58 | 6.13 | 27.99 |
| Comparative Example 3 | Single particle | 60 | 180.58 | 3.79 | 47.70 |
| Comparative Example 4 | Single particle | 60 | 142.76 | 7.84 | 18.21 |

### Experimental Example 2: BET Specific Surface Area Measurement of the Positive Electrode Active Material

For the positive electrode active materials respectively prepared in Examples 1 and 2 and Comparative Examples 1 to 4, a specific surface area was calculated from a nitrogen gas adsorption amount at a liquid nitrogen temperature (77K) using a specific surface area analyzer (Bell Japan Inc., BELSORP-mino II). The results thereof are presented in [Table 2] below.

**[Table 2]**

| | BET specific area [m²/g] |
|---|---|
| Example 1 | 0.86 |
| Example 2 | 0.82 |
| Comparative Example 1 | 0.88 |
| Comparative Example 2 | 0.80 |
| Comparative Example 3 | 0.74 |
| Comparative Example 4 | 0.78 |

### Experimental Example 3: Initial Efficiency Evaluation

Initial efficiency was evaluated for lithium secondary battery half-cells which were prepared as follows by using the positive electrode active materials prepared in Examples 1 and 2 and Comparative Examples 1 to 4, respectively.

### <Preparation of Lithium Secondary Battery>

Each of the positive electrode active materials prepared in Examples 1 and 2 and Comparative Examples 1 to 4, a conductive agent (Carbon Black), and a PVDF binder were mixed in N-methylpyrrolidone in a weight ratio of 95:2:3 to prepare a positive electrode slurry. One surface of an aluminum current collector was coated with the positive electrode slurry, dried at 60°C, and then rolled to prepare a positive electrode.

Lithium metal was used as a negative electrode, and a battery cell was prepared by preparing an electrode assembly by disposing a separator between the positive electrode prepared by the above-described method and the negative electrode, disposing the electrode assembly in a battery case, and then injecting an electrolyte solution into the case. The electrolyte solution was prepared by dissolving 0.6 M LiPF₆ in a mixed organic solvent, in which ethylene carbonate (EC) : dimethyl carbonate (DMC) : ethyl methyl carbonate (EMC) were mixed in a volume ratio of 1:2:1, and adding 2 wt% of vinylene carbonate (VC).

Specifically, after the prepared half-cells were subjected to formation, each half-cell was charged at a constant current of 0.1 C until a voltage reached 4.4 V at 25°C and then discharged at a constant current of 0.1 C until the voltage reached 2.5 V. Values of initial charge capacity and initial discharge capacity, and a ratio of the initial discharge capacity to the initial charge capacity defined as the initial efficiency are presented in [Table 3] below.

**[Table 3]**

| | Initial charge capacity [mAh/g] | Initial discharge capacity [mAh/g] | Initial efficiency [%] |
|---|---|---|---|
| Example 1 | 218.5 | 197.3 | 90.3 |
| Example 2 | 217.5 | 196.3 | 90.2 |
| Comparative Example 1 | 218.2 | 194.4 | 89.1 |
| Comparative Example 2 | 215.8 | 193.6 | 89.7 |
| Comparative Example 3 | 215.9 | 193.7 | 89.7 |
| Comparative Example 4 | 210.4 | 188.5 | 89.6 |

Referring to [Table 3], it may be confirmed that initial charge and discharge capacities and efficiencies of the lithium secondary batteries including the positive electrode active materials of Examples 1 and 2 were better than those of Comparative Examples 1 to 4.

### Experimental Example 4: Rate Capability Evaluation

The lithium secondary battery half-cells, which had been charged and discharged once in Experimental Example 3, were charged/discharged under conditions as in [Table 4] to evaluate rate capability. The results thereof are presented in [Table 4] below.

**[Table 4]**

| | 0.33C/0.33C | 1.0C/0.1C | 2.0C/0.1C |
|---|---|---|---|
| | [%] | [%] | [%] |
| Example 1 | 96.0 | 91.6 | 87.8 |
| Example 2 | 95.9 | 91.3 | 87.0 |
| Comparative Example 1 | 95.8 | 90.8 | 86.0 |
| Comparative Example 2 | 95.7 | 90.5 | 86.0 |
| Comparative Example 3 | 95.8 | 90.9 | 86.6 |
| Comparative Example 4 | 95.7 | 90.7 | 86.3 |

Referring to [Table 4], it may be confirmed that rate capabilities of the lithium secondary batteries including the positive electrode active materials of Examples 1 and 2 were better than those of Comparative Examples 1 to 4.

## Claims

1. A positive electrode active material comprising:
a lithium composite transition metal oxide which has an amount of nickel among total metals excluding lithium of 50 mol% to 80 mol% and is in a form of a single particle composed of one single nodule or a pseudo-single particle that is a composite of 40 or less nodules; and
a tungsten-containing coating layer formed on a surface of the lithium composite transition metal oxide,
wherein a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material in deionized water at 25°C for 1 hour, is in a range of 30 to 45.

2. The positive electrode active material of claim 1, wherein the tungsten-containing coating layer comprises a crystal phase including at least one selected from the group consisting of Li₂WO₄, Li₆WO₆, Li₇WO₆, Li₆W₂O₉, and Li₅W₂O₉.

3. The positive electrode active material of claim 1, wherein the number of moles of the lithium is in a range of 150 mmol/kg to 250 mmol/kg.

4. The positive electrode active material of claim 1, wherein the number of moles of the tungsten is in a range of 3 mmol/kg to 9 mmol/kg.

5. The positive electrode active material of claim 1, wherein the lithium composite transition metal oxide has a composition represented by Formula 1.
[Formula 1] LiₐNi_{b}Co_{c}M¹_{d}M²ₑO₂
wherein, in Formula 1, M¹ is at least one selected from the group consisting of manganese (Mn) and aluminum (Al), M² is at least one selected from the group consisting of titanium (Ti), magnesium (Mg), zirconium (Zr), yttrium (Y), barium (Ba), calcium (Ca), Zr, strontium (Sr), tungsten (W), tantalum (Ta), niobium (Nb), and molybdenum (Mo), and 1.0≤a≤1.5, 0.5≤b≤0.8, 0<c≤0.3, 0<d≤0.3, and 0≤e≤0.2.

6. The positive electrode active material of claim 1, wherein the positive electrode active material has a Brunauer-Emmett-Teller (BET) specific surface area of 0.50 m²/g to 1.20 m²/g.

7. The positive electrode active material of claim 1, wherein the positive electrode active material has a D₅₀ of 3.0 µm to 6.0 µm.

8. The positive electrode active material of claim 1, wherein the coating layer further comprises aluminum, and
the number of moles of the aluminum, which is measured by the inductively coupled plasma optical emission spectroscopy (ICP-OES) analysis after performing the pretreatment under the conditions of immersing the positive electrode active material in the deionized water at 25°C for 1 hour, is in a range of 3 mmol/kg to 10 mmol/kg.

9. The positive electrode active material of claim 1, wherein the coating layer further comprises at least one coating element selected from the group consisting of Al, Ti, fluorine (F), phosphorus (P), Mg, nickel (Ni), cobalt (Co), iron (Fe), chromium (Cr), vanadium (V), copper (Cu), calcium (Ca), zinc (Zn), Zr, Nb, Mo, Sr, antimony (Sb), bismuth (Bi), silicon (Si), and sulfur (S).

10. A method of preparing a positive electrode active material, the method comprising:
mixing a lithium composite transition metal oxide, which has an amount of nickel among total metals excluding lithium of 50 mol% to 80 mol% and is in a form of a single particle composed of one single nodule or a pseudo-single particle that is a composite of 40 or less nodules, with a tungsten-containing raw material and performing a heat treatment at a temperature of 410°C to 490°C to form a tungsten-containing coating layer on a surface of the lithium composite transition metal oxide,
wherein a ratio (Li/W) of the number of moles of lithium to the number of moles of tungsten, which is measured by inductively coupled plasma optical emission spectroscopy (ICP-OES) analysis after performing a pretreatment under conditions of immersing the positive electrode active material in deionized water at 25°C for 1 hour, is in a range of 30 to 45.

11. The method of claim 10, wherein the tungsten-containing raw material is at least one selected from the group consisting of WO₃, Li₃WO₄, and (NH₄)₁₀W₁₂O₄₁·5H₂O.

12. The method of claim 10, wherein the tungsten-containing raw material is mixed in an amount of 1,000 ppm to 6,000 ppm based on a total weight of the positive electrode active material.

13. The method of claim 10, wherein the heat treatment is performed for 3 hours to 7 hours.

14. The method of claim 10, further comprising mixing an aluminum raw material.

15. The method of claim 14, wherein the aluminum raw material is at least one selected from the group consisting of Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, and aluminum halide.

16. The method of claim 14, wherein the aluminum-containing raw material is mixed in an amount of 400 ppm to 3,000 ppm based on a total weight of the positive electrode active material.

17. A positive electrode comprising the positive electrode active material of any one of claims 1 to 9.

18. A lithium secondary battery comprising the positive electrode of claim 17.

19. The lithium secondary battery of claim 18, wherein the lithium secondary battery has a charge end voltage during operation of 4.35 V or more.
